# EUROPEAN PATENT APPLICATION

(11) **EP 2 677 426 A2**
(43) Date of publication of application: **25.12.2013**
(21) Application number: 13165930.2
(22) Date of filing: 30.04.2013
(51) Int. Cl.: G06F 9/50, G06F 12/08

(54) **Cyclic write area of a cache on a storage controller which can be adapted based on the amount of data requests**

(30) Priority: 22.06.2012 JP 2012141393
(71) Applicant: FUJITSU LIMITED, Kawasaki-shi, Kanagawa 211-8588 (JP)
(72) Inventor: Suzuki, Yasuhiro, Kanagawa, 211-8588 (JP); Yamamoto, Kohshi, Kanagawa, 211-8588 (JP)
(74) Representative: HOFFMANN EITLE

(57) **Abstract**

A data management apparatus includes a memory being accessible at a higher rate than a storage device, and a processor configured to control the memory to store a part of data stored in the storage device into a first storage area of the memory, the part of the data is cyclically selected from the data, and respond to a data request by using the cyclically selected part of the data stored in the first storage area.

## Description

### FIELD

The embodiments discussed herein are related to data management.

### BACKGROUND

It is known to configure a storage system such that an input/output control apparatus, a disk controller, and a magnetic disk apparatus are connected to each other via an interface bus such that data stored in the storage system is allowed to be accessed in accordance with a command from an upper-level apparatus. In this storage system, a cache memory is provided for each of the input/output control apparatus, the disk controller, and the magnetic disk apparatus. The input/output control apparatus has an integrated cache management table thereby to manage locations of data stored in the respective cache memories. In this storage system, when data is read by the upper-level apparatus, the integrated cache management table is searched to determine whether there is data in cache memories. If the integrated cache management table indicates that the data exists in some cache memory, the data is output from the cache memory. However, if the data does not exist in any cache memory, the magnetic disk apparatus is accessed and the data is output from the magnetic disk apparatus.

It is also known to configure a controller so as to include a cache memory that stores part of data stored in a storage apparatus. The controller has a look-ahead function. In a case where data to be looked ahead is already stored in a cache memory of another controller (which will be hereinafter referred to as the second controller, and the former controller will be referred to as the first controller), the data stored in the cache memory of the second controller is registered as look-ahead data in a look-ahead table. When a read request issued by a host apparatus specifies the data registered in the look-ahead table, the first controller performs control such that the data stored in the cache memory of the second controller is transferred to the host apparatus.

### CITATION LIST

[PATENT LITERATURE 1] Japanese Laid-open Patent Publication No. 2000-353125

[PATENT LITERATURE 1] Japanese Laid-open Patent Publication No. 2008-123363

### SUMMARY

### TECHNICAL PROBLEM

However, in the storage system described above, when there is no data in the cache memory, accessing the magnetic disk apparatus is performed in a random access mode in which it takes a certain time for a head to move on a disk, which may result in a reduction in response speed.

In this controller, as described above, it is difficult to suppress a reduction in the response speed in the random access mode when read requests successively issued are not relevant to each other, although it is possible to improve the response speed when the look-ahead data hits.

### SOLUTION TO PROBLEM

According to an aspect of the invention, a data management apparatus includes a memory being accessible at a higher rate than a storage device, and a processor configured to control the memory to store a part of data stored in the storage device into a first storage area of the memory, the part of the data is cyclically selected from the data, and respond to a data request by using the cyclically selected part of the data stored in the first storage area.

### ADVANTAGE EFFECTS ON INVENTION

In a data management apparatus disclosed in the present embodiment, it may be possible to improve the speed of response to a data request.

### BRIEF DESCRIPTION OF DRAWINGS

FIG. 1 illustrates an example of a hardware and software configuration of an information management apparatus according to an embodiment.

FIG. 2 illustrates an example of a configuration of an information system using an information management apparatus.

FIG. 3 illustrates a manner in which data is transmitted from an information collection apparatus to an information management apparatus.

FIG. 4 illustrates a process performed by a cyclic write control unit and a process performed by a data request response unit.

FIG. 5 illustrates an example of a manner of transitions of data stored in a cyclic write area.

FIG. 6 illustrates another example of a manner of transitions of data stored in a cyclic write area.

FIG. 7 is a flowchart illustrating an example of a process performed by a cyclic write control unit.

FIG. 8 illustrates an example of a table of requests under process.

FIG. 9 is a flowchart illustrating a flow of a process performed by a data request response unit.

FIG. 10 illustrates an example of data stored as a dictionary table corresponding to a data request.

FIG. 11 is a flowchart illustrating a flow of a process performed by a data request response unit.

FIG. 12 illustrates a manner of transitions of data in a case where a first data request (for data A, B, and C) is issued and subsequently a second data request (for data C, D, and K) is issued.

FIG. 13 illustrates a flow of a process performed by a comparative example of an apparatus.

### DESCRIPTION OF EMBODIMENTS

Embodiments are described below with reference to accompanying drawings. First embodiment is described below with reference to figures.

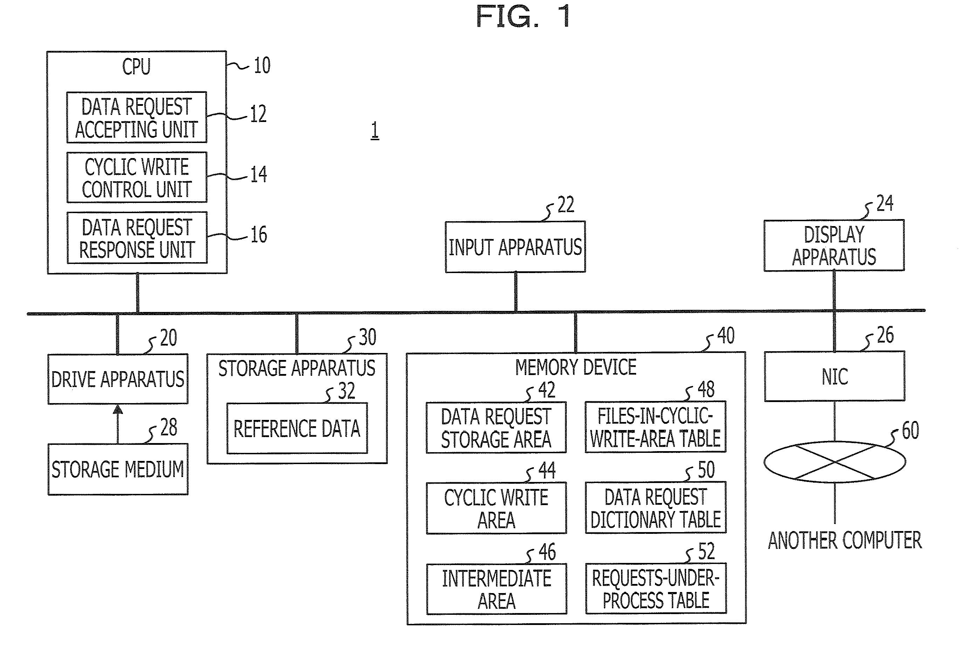

FIG. 1 illustrates an example of a configuration in terms of hardware and functions of an information management apparatus 1 according to the first embodiment. The information management apparatus 1 includes, for example, a Central Processing Unit (CPU) 10, a drive apparatus 20, an input apparatus 22, a display apparatus 24, a Network Interface Card (NIC) 26, a storage apparatus 30, and a memory device 40. These units are connected to each other via a bus or the like.

The CPU 10 is a processor serving as a processing unit including, for example, a program counter or an instruction decoder, various operation units, a Load Store Unit (LSU), a general register, etc. The information management apparatus 1 includes functional blocks realized by installing a program from the storage apparatus 30 or the like into the memory device 40 or the like and executing the program by the CPU 10. More specifically, the functional blocks include a data request accepting unit 12, a cyclic write control unit 14, and a unit configured to respond to a data request (hereinafter referred to as a data request response unit) 16. Note that programs that realize the functional blocks are not limited to being completely separate, but the programs may be subroutines or functions that are called by other programs. One or more of the functional blocks may be realized by hardware such as a Large Scale Integrated circuit (LSI), an Integrated Circuit (IC), a Field Programmable Gate Array (FPGA), or the like. Functions of the respective functional blocks will be described later.

The drive apparatus 20 is an apparatus configured to read a program or data from a storage medium 28. When the storage medium 28 in which the program is stored is mounted in the drive apparatus 20, the program is installed from the storage medium 28 into a storage apparatus 30 or the like via the drive apparatus 20. The storage medium 28 may be a portable storage medium such as a Compact Disc (CD), a Digital Versatile Disc (DVD), a Universal Serial Bus (USB) memory, etc.

Instead of using the storage medium 28 in installing the program executed by the CPU 10, the program may be downloaded from another computer via a NIC 26 and a network 60. The network 60 may be the Internet, a Local Area Network (LAN), a wireless network, or the like. Alternatively, the program may be stored in advance in the storage apparatus 30, a Read Only Memory (ROM), or the like when the information management apparatus 1 is shipped.

The input apparatus 22 may be, for example, a keyboard, a mouse, a button, a touch pad, a touch panel, a microphone, or the like. The display apparatus 24 may be, for example, a Liquid Crystal Display (LCD), a Cathode Ray Tube (CRT), or the like.

The storage apparatus 30 may be, for example, a Hard Disk Drive (HDD). The storage apparatus 30 stores data to be referred to from the outside (hereinafter referred to as a reference data) 32. The reference data 32 is a set of a plurality of pieces of data.

The memory device 40 is an apparatus that is capable of being accessed at a higher rate than the storage apparatus 30 is capable. The memory device 40 may be, for example, a Random Access Memory (RAM). The memory device 40 includes a data request storage area 42, a cyclic write area 44, an intermediate area 46, and other areas such as a program storage area which are not illustrated in the figure. The memory device 40 stores data including a table describing a list of files existing in the cyclic write area (hereinafter referred to as a files-in-cyclic-write-area table) 48, a dictionary table associated with a data request (hereinafter referred to simply as a data request dictionary table) 50, a table of requests under process (hereinafter, referred to as a requests-under-process table) 52, etc.

The combination of the storage apparatus 30 and the memory device 40 is not limited to that of the HDD and the RAM, but various combinations may be possible. For example, RAM (as the memory device 40) and HDD (as the storage apparatus 30), RAM (as the memory device 40) and DVD (as the storage apparatus 30), RAM (as the memory device 40) and CD (as the storage apparatus 30), RAM (as the memory device 40) and Blu-ray (registered trademark) Disc (as the storage apparatus 30), Solid State Drive or flash memory (SSD) (as the memory device 40) and HDD (as the storage apparatus 30), SSD (as the memory device 40) and DVD (as the storage apparatus 30), SSD (as the memory device 40) and CD (as the storage apparatus 30) CD, or SSD (as the memory device 40) and Blu-ray Disc (as the storage apparatus 30) may be possible.

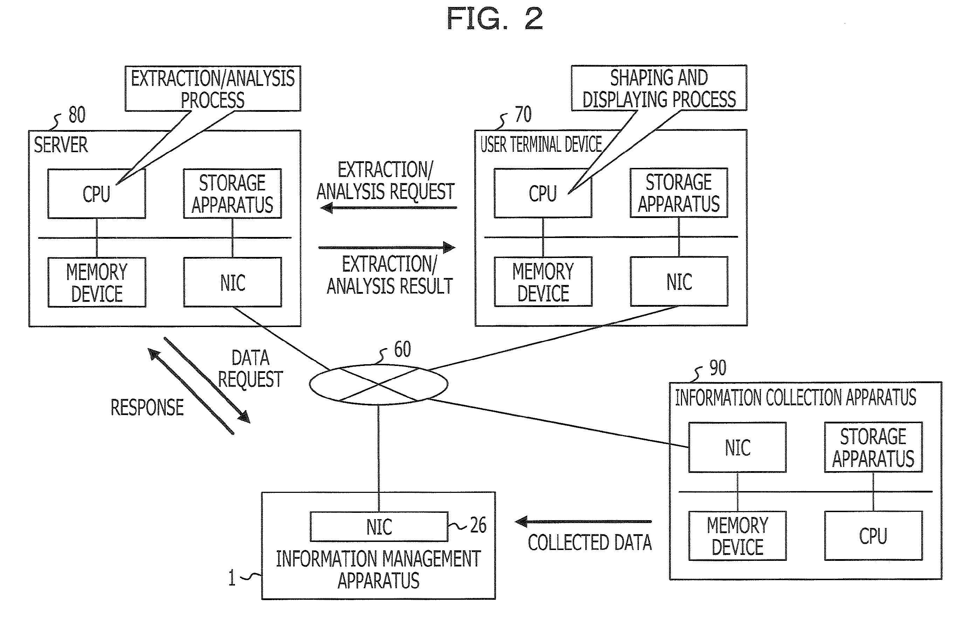

FIG. 2 illustrates an example of a configuration of an information system using the information management apparatus 1. The information management apparatus 1 is connected, via, for example, a network 60 or the like, to a user terminal device 70, a server 80, and an information collection apparatus 90. The user terminal device 70, the server 80, and the information collection apparatus 90 each may be a computer including, for example, a CPU, a storage apparatus, a memory device, a NIC, etc.

For example, the user terminal device 70 transfers an extraction/analysis request to the server 80. An extraction condition may be, for example, "sales in 1Q greater than 50", and a return parameter may be, for example, "division", "department", or the like. The server 80 sends a data request to the information management apparatus 1 to request the information management apparatus 1 to search the reference data 32 to find data to be used in extraction/analysis requested by the extraction/analysis request and return the found data. The information management apparatus 1 retrieves data corresponding to the data request from the reference data 32 and transmits the retrieved data, as a response, to the server 80. The server 80 performs an extraction/analysis process based on the data received from the information management apparatus 1 and transmits a result of the process (an extraction/analysis result) to the user terminal device 70. The user terminal device 70 performs a shaping process or the like on the received extraction/analysis result and displays the result on a display apparatus (not illustrated).

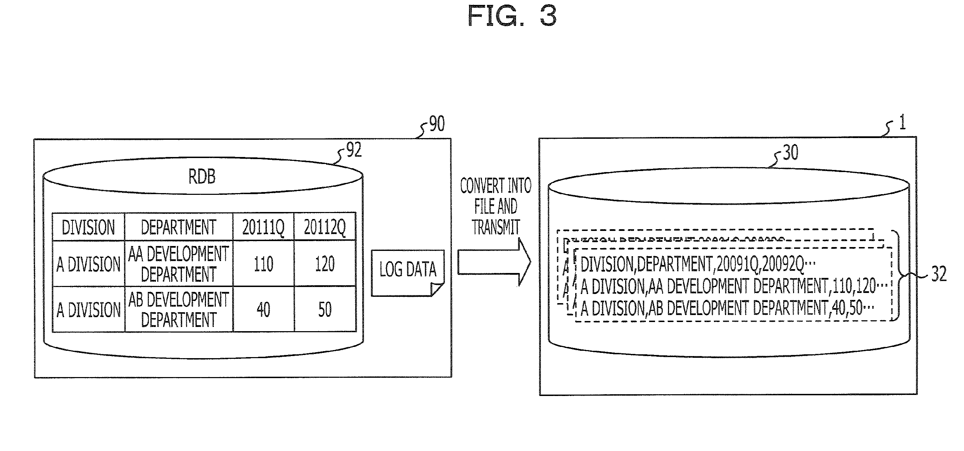

The information collection apparatus 90 collects original data for the reference data 32 to be stored in the storage apparatus 30 and transmits the collected original data to the information management apparatus 1. FIG. 3 is a diagram illustrating a manner in which the data is transmitted from the information collection apparatus 90 to the information management apparatus 1. The information collection apparatus 90 manages the data, for example, in the form of Relational DataBase (RDB) 92 on the storage apparatus. The information collection apparatus 90 converts a record stored in the RDB 92 into a file using log data of the RDB 92 and transmits the resultant file to the information management apparatus 1. The file may be, for example, a Comma Separated Values (CSV) file, an Extensible Markup Language (XML) file, or the like. The file may have another file attached thereto. The data collected by the information collection apparatus 90 may be large scale data such as sales data of a Point Of Sale (POS) system. The information collection apparatus 90 converts, for example, the log data into a CSV or XML file and transmits the resultant file to the information management apparatus 1.

A process performed by the cyclic write control unit 14 and a process performed by the data request response unit 16 are described below.

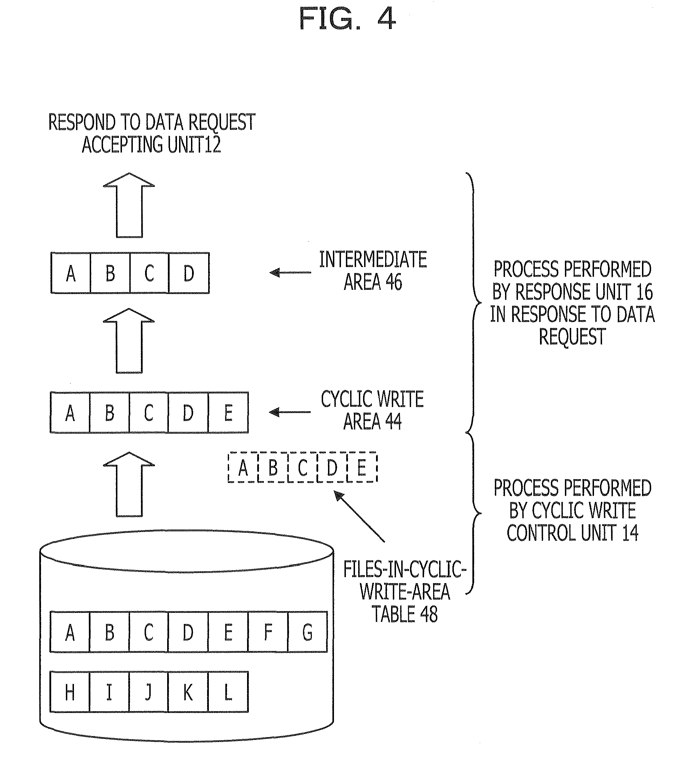

FIG. 4 illustrates a process performed by the cyclic write control unit 14 and a process performed by the data request response unit 16. The cyclic write control unit 14 and the data request response unit 16 are each, for example, middleware configured to perform a process for the data request accepting unit 12 realized by an application program. The data request accepting unit 12 accepts and manages a data request issued by the server 80. More specifically, the data request accepting unit 12 stores the content of the data request in the data request storage area 42, and when a response is output from the data request response unit 16, the data request accepting unit 12 transmits the response to the server 80.

In the following description, it is assumed by way of example that a plurality of pieces of data A, B, C,...., L are already stored as the reference data 32 in the storage apparatus 30. The data B is stored at an address following an address at which the data A is stored, and the data C is stored at an address following the address at which the data B is stored. Other pieces of data are stored in a similar manner, and thus the data L is stored at an address following an address at which data K is stored. Furthermore, it is also assumed that the cyclic write area 44 has a storage capacity of storing five pieces of data. For simplicity of explanation, it is assumed that each data has the same data size, or a maximum data size is equal to or smaller than the storage capacity of one storage area. Although there is no particular restriction on the number of pieces of data allowed to be written in the intermediate area 46, it is assumed in the example illustrated in FIG. 4 that the intermediate area 46 has a capacity of storing four pieces of data.

The cyclic write control unit 14 sequentially reads data from the storage apparatus 30 in order data A → data B → data C →...→ data L, and writes them into the cyclic write area 44. In this writing process, if the cyclic write area 44 has a free storage space, the cyclic write control unit 14 writes the data in the free storage space of the cyclic write area 44. However, when the cyclic write area 44 does not have a free storage space, the cyclic write control unit 14 deletes one piece of data (for example, an oldest piece of data) from the cyclic write area 44, and then the cyclic write control unit 14 writes the data in the cyclic write area 44. That is, the cyclic write area 44 is controlled such that part of the reference data 32 stored in the storage apparatus 30 is cyclically stored in the cyclic write area 44. The files-in-cyclic-write-area table 48 is data managed by the cyclic write control unit 14 as with the cyclic write area 44, and only identifiers indicating the data stored in the cyclic write area 44 are described in the table 48 (note that the contents of the data are stored in the cyclic write area 44).

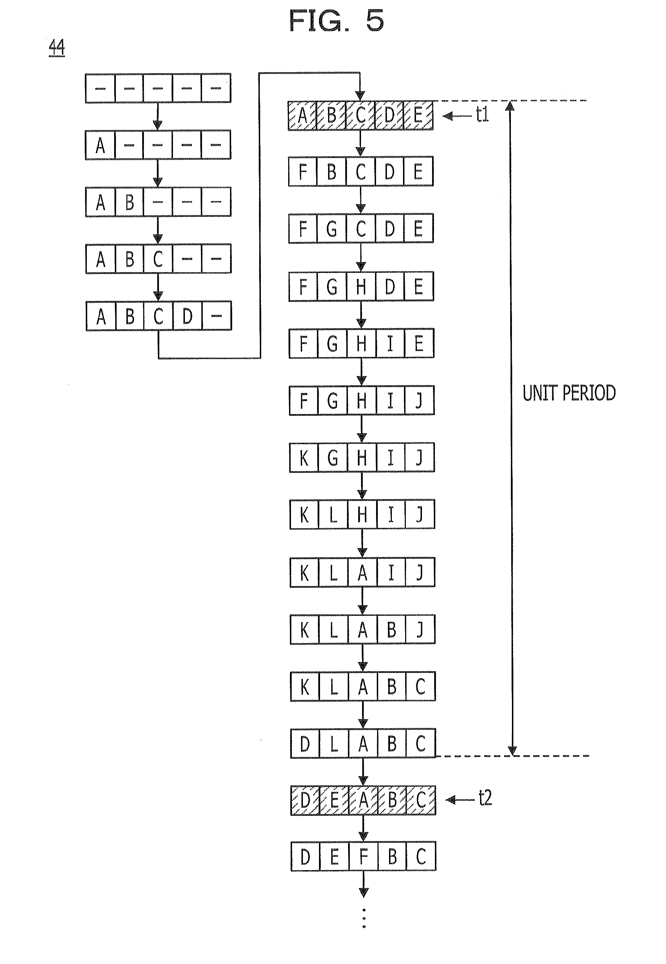

FIG. 5 illustrates an example of a manner of transitions of data stored in the cyclic write area 44. As illustrated in FIG. 5, pieces of data stored in the cyclic write area 44 at time t1 are the same in content as pieces of data stored in the cyclic write area 44 at time t2 although the order or locations thereof may be different. The same sequence of transitions in a period from time t1 to time t2 appears repeatedly in following periods.

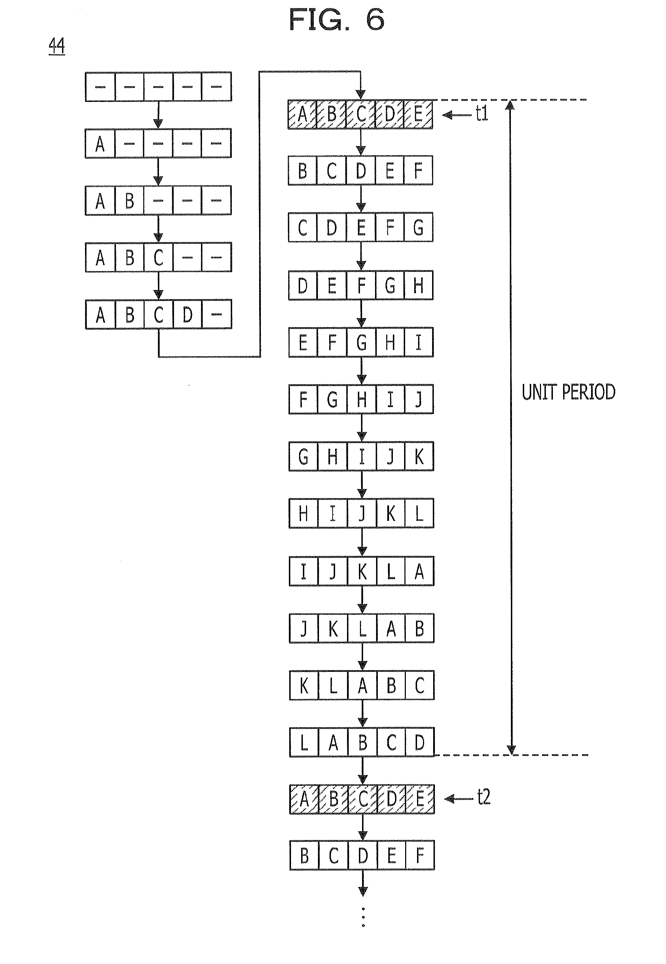

FIG. 6 illustrates another example of a manner of transitions of data stored in the cyclic write area 44. In the example illustrated in FIG. 6, when the cyclic write area 44 does not have a free storage space, a piece of data at the head is deleted from the cyclic write area 44 to create a free storage space, and pieces of data at following locations are shifted forward to the created free storage space. The cyclic write control unit 14 may employ either the process illustrated in FIG. 5 or the process illustrated in FIG. 6. Alternatively, another method may be employed to write data read from the storage apparatus 30 into the cyclic write area 44.

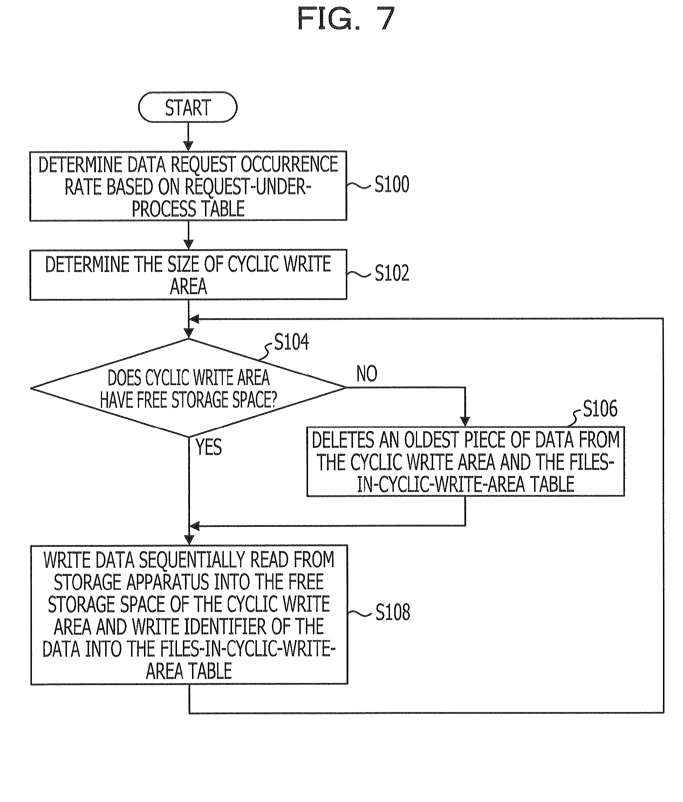

FIG. 7 is a flow chart illustrating an example of a process performed by the cyclic write control unit 14. The process illustrated in FIG. 7 is started, for example, when the information management apparatus 1 is started.

First, the cyclic write control unit 14 determines a data request occurrence rate based on a content of a requests-under-process table 52 (S100), and the cyclic write control unit 14 determines the size of the cyclic write area 44 based on the data request occurrence rate (S102). For example, when the data request occurrence rate is high, the cyclic write control unit 14 reduces the size of the cyclic write area 44, while the cyclic write control unit 14 increases the size of the cyclic write area 44 when the data request occurrence rate is low such that the total area being used in the memory device 40 is limited to a particular value. The data request occurrence rate may be calculated, for example, based on the number of pieces of data corresponding to data requests stored in the requests-under-process table. More specifically, for example, the cyclic write control unit 14 determines that the data request occurrence rate is high when the calculated value is equal to or greater than a threshold value.

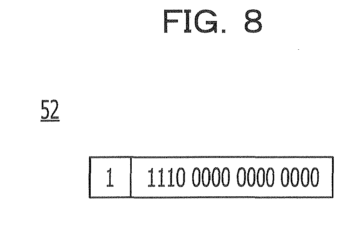

The requests-under-process table 52 is table data managed by the data request response unit 16. More specifically, the requests-under-process table 52 indicates properties of data being in a state in which the data is under process after the data request was issued and before outputting of the data (response) is complete. FIG. 8 illustrates an example of a requests-under-process table 52. The requests-under-process table 52 represents a sequence of bits corresponding to IDs, described in the data request dictionary table 50, of data included in the data request in a period from a time at which the data request is received to a time at which a process end request is accepted. As illustrated in FIG. 8, the requests-under-process table 52 describes whether data is requested or not by a sequence of bits corresponding to identifiers (request #1, request #2, and so on) of the respective data requests. In the sequence of bits, "1" indicates that corresponding data is requested, while "0" indicates that corresponding data is not requested. The number of digits of each sequence of bits corresponds to a data ID in the data request dictionary table 50.

The cyclic write control unit 14 then determines whether the cyclic write area 44 has a free storage space (S104). When the cyclic write area 44 has no free storage space, the cyclic write control unit 14 deletes, for example, an oldest piece of data from the cyclic write area 44 and also from the files-in-cyclic-write-area table 48 (S106).

The cyclic write control unit 14 then writes the data sequentially read from the storage apparatus 30 into the free storage area of the cyclic write area 44 and writes the identifies of the data into the files-in-cyclic-write-area table 48 (S108). Thereafter, the processing flow returns to S104.

Alternatively, the cyclic write control unit 14 may perform the process such that after the process from S104 to S108 is performed a particular number of times, the processing flow returns to S100.

The data request response unit 16 responds to a data request accepted by the data request accepting unit 12 by using the data stored in the cyclic write area 44 managed by the cyclic write control unit 14.

The process by the data request response unit 16 is performed asynchronously to the process performed by the cyclic write control unit 14. That is, the data request response unit 16 does not specify data to be read by the cyclic write control unit 14 from the reference data stored in the storage apparatus 30. Instead, the data request response unit 16 basically waits for the data included in the data request to be stored in the cyclic write area 44, and, after the data included in the data request has been stored in the cyclic write area 44, the data request response unit 16 reads the data from the cyclic write area 44 to respond to an issuer of the data request.

Thus, it is ensured that the reading of data from the storage apparatus 30 by the cyclic write control unit 14 is performed in a sequential mode. This suppresses a reduction in the response speed by a movement of a head in the storage apparatus 30.

A waiting period, in which the data request response unit 16 waits until the data included in the data request is stored in the cyclic write area 44, is short on average when the data request occurrence rate is high because in such a state, the probability is very small that data is deleted without being used, i.e., the number of pieces of such data deleted without being used is reduced or substantially hidden.

In a case where a plurality of data requests are issued in a particular period, some data request may wait for a long period while some data request may wait for a short period. In such a state, the average waiting time for all data requests is shorter than an average waiting time in an apparatus configured such that data to be read from the storage apparatus 30 is specified individually for each data request.

Thus, the information management apparatus 1 according to the present embodiment is capable of improving the response speed for data requests in the state in which the data request occurrence rate is high.

To handle a state in which the same data is requested successively in a short period, the data request response unit 16 uses an intermediate area 46 to provide a further efficient response without simply waiting until data included in the data request is stored in the cyclic write area 44. The intermediate area 46 is used to store data written in the cyclic write area 44 in a period from a time at which certain data is accepted to a time at which a process end request is accepted, or to store data that is, of data written in the cyclic write area 44 in response to an immediately previous or further preceding data request, to be further maintained in the cyclic write area 44.

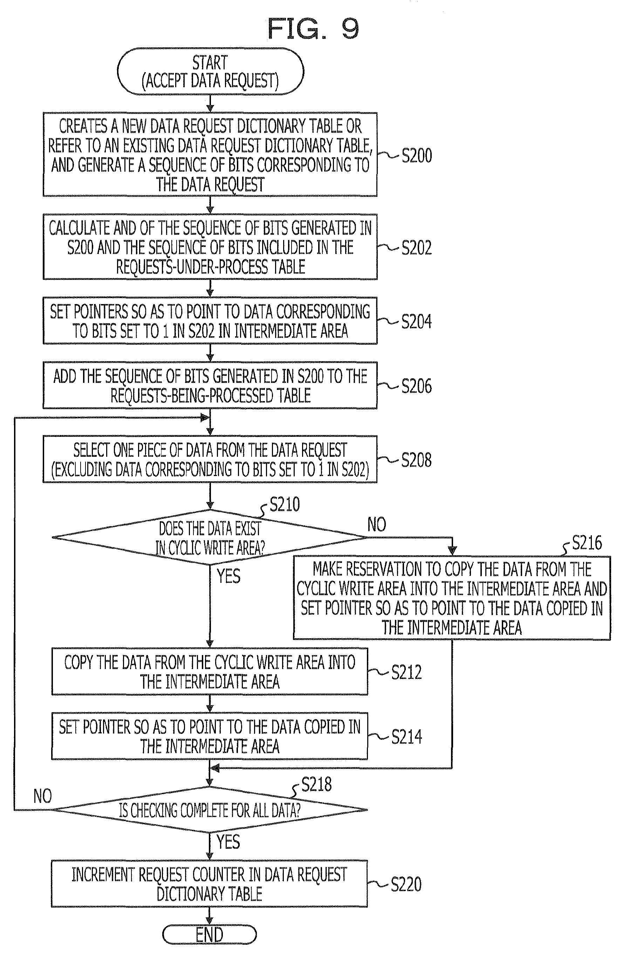

FIG. 9 is a flow chart illustrating a flow of a process performed by the data request response unit 16. The process illustrated in FIG. 9 is started when the data request accepting unit 12 accepts a data request from the server 80.

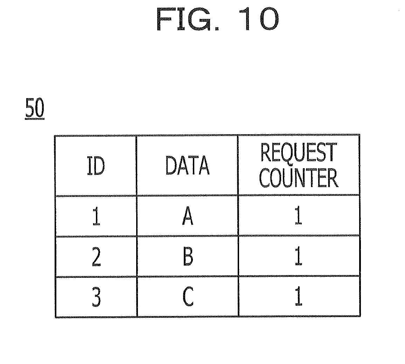

First, the data request response unit 16 creates a new data request dictionary table 50 or refers to an existing data request dictionary table 50, and generates a sequence of bits corresponding to the data request (S200). FIG. 10 illustrates an example of data stored as the data request dictionary table 50. In the data request dictionary table 50, an identifier of data and a request counter value, based on which to determine whether data is to be deleted from the intermediate area 46, are stored in relation to an ID assigned by the data request response unit 16. When the information management apparatus 1 is started, the data request dictionary table 50 may be, for example, blank data. When a new data request is accepted, IDs are assigned to respective pieces of data included in the data request.

When a data request requests a plurality of pieces of data, for example, A, B, and C, the sequence of bits corresponding to the data request is "1110 0000 0000 0000" because corresponding IDs described in the data request dictionary table 50 are 1, 2, and 3. In a case where data C, D, and K are requested by a data request, a sequence of bits generated corresponding to the data request is "0011 1000 0000 0000" because corresponding IDs described in the data request dictionary table 50 are 3, 4, and 5.

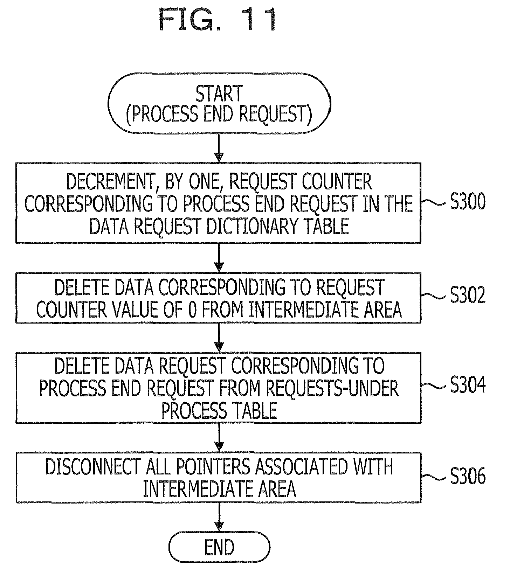

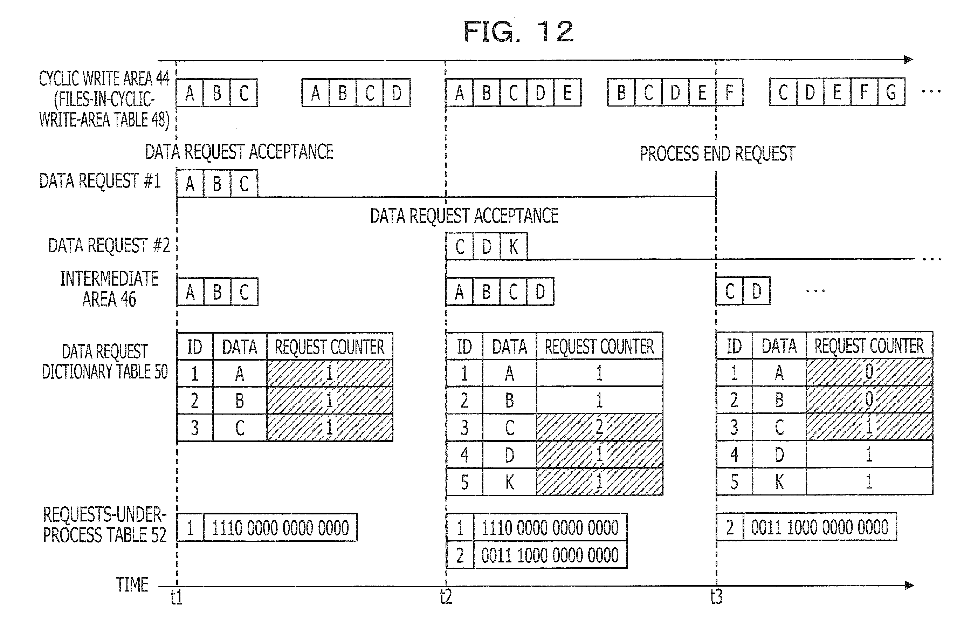

Thereafter, the data request response unit 16 calculates the AND (the logical product) of the sequence of bits generated in S200 and each sequence of bits included in the requests-under-process table 52 (S202). In a case, for example, where a sequence of bits included in the requests-under-process table 52 is "1110 0000 0000 0000" and the sequence of bits generated in S200 is "0011 1000 0000 0000", then the AND is calculated as "0010 0000 0000 0000". In this state, the data C corresponding to "0010 0000 0000 0000" is stored in the intermediate area 46 (as seen from FIG. 11 and FIG. 12). Therefore, the data request response unit 16 sets a pointer so as to point to the data C corresponding to "0010 0000 0000 0000" (S204), and transfers the data C to the data request accepting unit 12.

Thereafter, the data request response unit 16 adds the sequence of bits generated in S200 to the requests-under-process table for use in a process to be performed next according to the flow chart illustrated in FIG. 9 (S206).

The data request response unit 16 then selects one piece of data from the data request (S208). In this process in S208, the data request response unit 16 excludes data corresponding to a bit set to 1 in S202.

The data request response unit 16 then determines whether the data selected in S208 exists in the cyclic write area 44 (S210). In a case where the data selected in S208 exists in the cyclic write area 44, the data request response unit 16 copies this data from the cyclic write area 44 into the intermediate area 46 (S212), and sets a pointer so as to point to the data copied in the intermediate area 46 (S214). The data request response unit 16 then transfers the data to the data request accepting unit 12.

In a case where the data selected in S208 does not exist in the cyclic write area 44, the data request response unit 16 makes a reservation to copy the data from the cyclic write area 44 into the intermediate area 46 and set a pointer so as to point to the data copied in the intermediate area 46 (S216). When the data selected in S208 has been written into the cyclic write area 44, the data request response unit 16 performs the process described above.

Thereafter, the data request response unit 16 determines whether the checking is complete for all data associated with the data request (except for data corresponding to a bit set to 1 in S202) (S218). In a case where the checking is not complete for all data associated with the data request, the data request response unit 16 returns the processing flow to S208 to select next data. On the other hand, in a case where the checking is complete for all data associated with the data request, the processing flow proceeds to S220.

In the case where the checking is complete for all data associated with the data request, the data request response unit 16 increments, by one, a request counter, corresponding to the data request, of those in the data request dictionary table 50, and ends one routine of the process according to the flow chart illustrated in FIG. 9.

When the server 80 has received all data included in the data request, the server 80 outputs a process end request associated with the data request to the information management apparatus 1. FIG. 11 is a flow chart illustrating a flow of a process performed by the data request response unit 16. The process illustrated in the flow chart of FIG. 11 is started at a later timing of the following two timings; 1) when the process end request from the server 80 is accepted, or 2) when transmission is compete for all data associated with the data request and a predetermined period of time has been elapsed after the data request was accepted. Note that the process illustrated in the flow chart of FIG. 11 may be started when transmission is compete for all data associated with the data request and the predetermined period of time has been elapsed after the data request was accepted, regardless of whether the process end request has been received from the server 80.

First, the data request response unit 16 decrements, by one, a request counter corresponding to the data request when the request for the end of the process associated with the data request is issued (or when the transmission is complete for all data and the predetermined period of time has been elapsed after the data request is accepted). (S300).

The data request response unit 16 then deletes, from the intermediate area 46, the data corresponding to the request counter whose value has become equal to 0 (S302).

The data request response unit 16 deletes the data request for which the process end request has been issued from the requests-under-process table 52 (S304).

The data request response unit 16 then disconnects all pointers associated with the intermediate area 46 (S306), and ends one routine of the process according to the flow chart illustrated in FIG. 11.

As a result of the process illustrated in FIGs. 9 and 11, data written in the cyclic write area 44 in the period from the time at which the data request is accepted to the time at which the process end request is accepted is stored in the intermediate area 46, or, if data written in the cyclic write area 44 in response to an immediately previous data request or further preceding to that includes data to be further maintained in the cyclic write area 44, then such data is stored in the intermediate area 46.

FIG. 12 illustrates an example of a sequence of transitions of data for a case in which a data request #1 for data A, B, and C is issued and subsequently a data request #2 for data C, D, and K is issued.

When the data request #1 is accepted at time t1 in FIG. 12, the process illustrated in the flow chart of FIG. 9 is started for the data request #1, and data A, B, and C are copied from the cyclic write area 44 into the intermediate area 46 (S212 in FIG. 9 is performed as many times as there are pieces of data, i.e., three pieces of data in this specific case). The data A, B, and C are registered in the data request dictionary table 50 (S200 in FIG. 9), and each request counter is set to have a counter value of 1 (S220 in FIG. 9). In the requests-under-process table 52, a sequence of bits "1110 0000 0000 0000" is stored so as to correspond to the data request #1 (S200 and S206 in FIG. 9). Thereafter, at an arbitrary time in a period from time t1 to time t3, the data A, B, and C are transferred to the data request accepting unit 12.

When the data request #2 is accepted at time t2 in FIG. 12, the process illustrated in the flow chart of FIG. 9 is started for the data request #2, and the data D is copied from the cyclic write area 44 into the intermediate area 46 (S212 in FIG. 9). The data D and E are added to the registration in the data request dictionary table 50 (S200 in FIG. 9). A request counter associated with the data C is set to have a counter value of 2, and request counters associated with the data D and E are respectively set to have a counter value of 1 (S220 in FIG. 9). In the requests-under-process table 52, a sequence of bits "0011 1000 0000 0000" is stored so as to correspond to the data request #2 (S200 and S206 in FIG. 9). The data C and D are transferred to the data request accepting unit 12 at an arbitrary time (not illustrated) in a period from the time t2 to a time at which a process end request for the data request #2 is received.

When a process end request for the data request #1 is accepted at time t3 in FIG. 12, the process illustrated in the flow chart of FIG. 11 is started for the data request #1. As a result, the request counters associated with the data A, B, and C are decremented by 1 in the data request dictionary table 50 (S300 in FIG. 11). As a result, the counter values of the request counters associated with the data A and B become equal to 0, and thus the data A and B are deleted from the intermediate area 46 (S302 in FIG. 11). Furthermore, the sequence of bits "1110 0000 0000 0000" corresponding to the data request #1 for which the process end request is accepted is deleted from the requests-under-process table 52.

In the process described above, requests for the data C are successively issued in a particular continuous period, and thus the data C is maintained in the intermediate area 46 at least until the process is completed for the latter data request #2. This makes it unnecessary for the process to wait until the same data is stored again in the cyclic write area in the situation in which requests for the same data are issued a plurality of times in a short period, and thus a further improvement in the response speed to data requests is achieved.

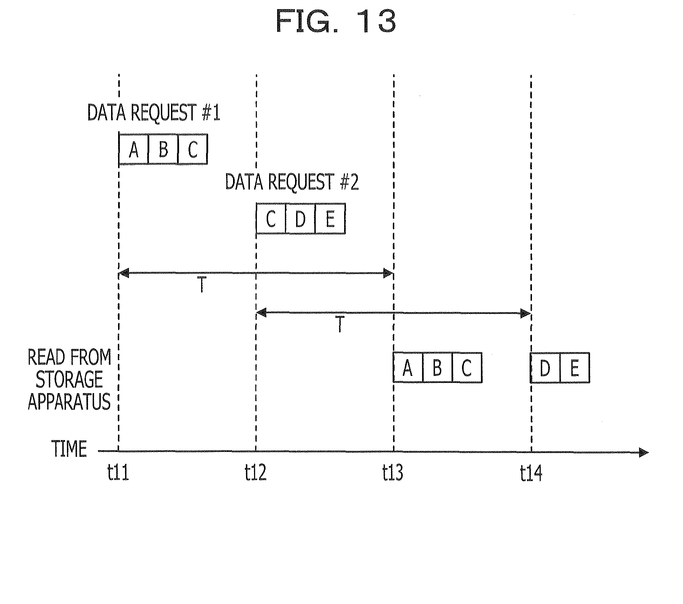

The information management apparatus 1 according to the present embodiment also has the advantage described above over an apparatus configured such that when a storage apparatus is accessed randomly, if a request for the same data is issued successively a plurality of times within a particular period, it is sufficient to perform the accessing only once. FIG. 13 is a diagram schematically illustrating a flow of a process performed by a comparative example of an apparatus. In this comparative example, in a case where a data request #1 for data A, B, and C is issued at time t11 in FIG. 13 and subsequently a further data request #2 for data C, D, and E is issued in a period before a waiting time T is elapsed, then accessing the storage apparatus is performed at time t3 after the waiting time T. At time t13, data A, B, and C are read from the storage apparatus. Thereafter, when, at time t14, a waiting time T is further elapsed since the acceptance of the data request #2, the storage apparatus is accessed to read data E and F. In the comparative example of the apparatus, although the number of times the storage apparatus is accessed for the data C may be reduced by one, random accessing occurs and besides waiting occurs over a waiting time T.

In contrast, the information management apparatus 1 according to the present embodiment is capable of sequentially accessing the storage apparatus 30. Furthermore, when a data request is accepted, data may be transferred at an arbitrary time before a process end request is accepted. Therefore, in the information management apparatus 1 according to the present embodiment, an improvement in response speed to data requests is achieved compared with the comparative example of the apparatus described above with reference to FIG. 13.

According to the embodiment, as described above, the process by the data request response unit 16 is performed asynchronously to the process performed by the cyclic write control unit 14, and the reading from the storage apparatus 30 by the cyclic write control unit 14 is performed in the sequential manner. As a result, it is possible to suppress a reduction in the response speed by a movement of a head in the storage apparatus 30.

The waiting period, in which the data request response unit 16 waits until the data included in the data request is stored in the cyclic write area 44, is short on average when the data request occurrence rate is high because in such a state, the probability is very small that data is deleted without being used, i.e., the number of pieces of such data deleted without being used is reduced or substantially hidden.

Thus, the information management apparatus 1 according to the present embodiment is capable of improving the response speed for data requests in the state in which the data request occurrence rate is high.

Furthermore, storing data in the intermediate area 46 is controlled such that if data written in the cyclic write area 44 in response to an immediately previous data request or further preceding to that includes data to be further maintained in the cyclic write area 44, such data is stored in the intermediate area 46. This makes it unnecessary for the process to wait until the same data is stored again in the cyclic write area in the situation in which requests for the same data are issued a plurality of times in a short period, and thus a further improvement in the response speed to data requests is achieved.

The embodiments of the disclosure have been described above. However, embodiments are not limited to those embodiments. Various changes and substitutions may be made hereto without departing from the spirit and scope of the disclosure.
All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present invention have been described in detail, it should be understood that the various changes, substitutions, and alterations could be made hereto without departing from the spirit and scope of the invention.

## Claims

1. A data management apparatus comprising:
a memory unit being accessible at a higher rate than a storage device;
a control unit that controls the memory unit to store a part of data stored in the storage device into a first storage area of the memory unit, the part of the data is cyclically selected from the data; and
a response unit that responds to a data request by using the cyclically selected part of the data stored in the first storage area.

2. The data management apparatus according to claim 1, wherein
the control unit copies target data requested by the data request from the cyclically selected part of the data stored in the first storage area into a second storage area of the memory unit,
the data request is responded by using the target data stored in the second storage area, and
the target data is maintained in the second storage area until the data request is responded.

3. The data management apparatus according to claim 2, wherein when the target data is requested by another data request, the target data is maintained in the second storage area until the another data request is responded.

4. The data management apparatus according to any one of claims 1 to 3, wherein
the control unit controls a size of the first storage area based on an occurrence rate of data requests for the data.

5. A data management method comprising:
controlling a memory, being accessible at a higher rate than a storage device, to store a part of data stored in the storage device into a first storage area of the memory by a processor, the part of the data is cyclically selected from the data; and
responding to a data request by using the cyclically selected part of the data stored in the first storage area.

6. The data management method according to claim 5, further comprising:
copying target data requested by the data request from the cyclically selected part of the data stored in the first storage area into a second storage area of the memory, wherein
the data request is responded by using the target data stored in the second storage area, and
the target data is maintained in the second storage area until the data request is responded.

7. The data management method according to claim 6, wherein when the target data is requested by another data request, the target data is maintained in the second storage area until the another data request is responded.

8. The data management method according to any one of claims 5 to 7, further comprising:
controlling a size of the first storage area based on an occurrence rate of data requests for the data.

9. A data management program that causes a computer to execute a procedure, the procedure comprising:
controlling a memory, being accessible at a higher rate than a storage device, to store a part of data stored in the storage device into a first storage area of the memory, the part of the data is cyclically selected from the data; and
responding to a data request by using the cyclically selected part of the data stored in the first storage area.

10. The data management program according to claim 9, the procedure further comprising:
copying target data requested by the data request from the cyclically selected part of the data stored in the first storage area into a second storage area of the memory, wherein
the data request is responded by using the target data stored in the second storage area, and
the target data is maintained in the second storage area until the data request is responded.

11. The data management program according to claim 10, wherein when the target data is requested by another data request, the target data is maintained in the second storage area until the another data request is responded.

12. The data management program according to any one of claims 9 to 11, the procedure further comprising:
controlling a size of the first storage area based on an occurrence rate of data requests for the data.
